# DEMANDE DE BREVET EUROPEEN

(11) **EP 3 772 714 A1**
(43) Date de publication de la demande: **10.02.2021**
(21) Numéro de dépôt: 20189971.3
(22) Date de dépôt: 07.08.2020
(51) Int. Cl.: G06Q 10/06, G06Q 50/06

(54) **PROCÉDÉ DE DÉTERMINATION DE QUANTITÉS D'ÉNERGIE ÉCHANGÉES ENTRE DES ENTITÉS D'UNE INSTALLATION ÉLECTRIQUE ET UN RÉSEAU DE DISTRIBUTION ÉLECTRIQUE**

(30) Priorité: 07.08.2019 FR 1909047
(71) Demandeur: TOTAL DIRECT ENERGIE, 75015 Paris (FR)
(72) Inventeur: FALLAS, Éric, 75015 PARIS (FR); CHETTIAR, Vincent, 78000 VERSAILLES (FR); GREGOIRE, Tony, 75013 PARIS (FR); DUPERRY, Louis, 75017 PARIS (FR)
(74) Mandataire: Lavoix

(57) **Abrégé**

La présente invention concerne un procédé de détermination de quantités d'énergie échangées entre des entités d'une installation électrique (10) et un réseau de distribution électrique (12), l'installation électrique (10) comprenant une entité (16) de production d'énergie photovoltaïque et une entité (18) de consommation d'énergie photovoltaïque, le procédé comprenant la détermination des quantités d'énergie échangées entre :
- l'entité de production (16) et l'entité de consommation (18),
- l'entité de production (16) et le réseau de distribution (12),
en fonction d'une première quantité d'énergie consommée par l'entité de consommation (18), d'une deuxième quantité d'énergie produite par l'entité de production (16), et de sorte à respecter un premier critère de priorité stipulant que l'énergie produite par l'entité de production (16) est acheminée en priorité à l'entité de consommation (18).

## Description

La présente invention concerne un procédé de détermination de quantités d'énergie échangées entre des entités d'une installation électrique et un réseau de distribution électrique. La présente invention se rapporte aussi à un produit programme d'ordinateur associé.

L'autoconsommation consiste, pour un consommateur, à consommer l'énergie électrique produite à partir de panneaux photovoltaïques installés dans son habitation.

La rentabilité d'un processus d'autoconsommation est complexe à estimer pour un consommateur puisque des flux d'énergie qu'il leur est difficile d'évaluer directement sont à prendre en compte. Ces flux d'énergie comprennent notamment la production d'énergie qui dépend de l'ensoleillement, l'énergie consommée par des panneaux photovoltaïques qui dépend des usages du consommateur, et l'énergie refoulée au réseau de distribution qui permet d'évacuer l'énergie non consommée localement par le consommateur.

Du fait de cette complexité, le consommateur n'est pas en mesure de procéder lui-même à l'évaluation de la rentabilité de son projet d'autoconsommation ou de son installation photovoltaïque.

Aussi, pour procéder à une telle évaluation, le consommateur doit se rapprocher d'une entreprise spécialisée, convenir d'un rendez-vous afin qu'un technicien se déplace et collecte l'ensemble des caractéristiques du projet, notamment l'environnement du toit et les usages du consommateur, et enfin attendre plusieurs jours pour recevoir le résultat de l'étude.

Cette série d'étapes chronophages s'avère fastidieuse pour le consommateur, ce qui peut l'entraîner à abandonner son projet d'autoconsommation. En outre, si le consommateur souhaite faire évoluer son projet ou optimiser son installation photovoltaïque, il doit attendre le résultat d'une nouvelle étude.

Il existe donc un besoin pour un procédé permettant de déterminer des quantités d'énergie échangées entre une installation électrique et un réseau de distribution électrique de manière simple et rapide, ces quantités d'énergie échangées étant, par exemple, utilisées pour déterminer des données relatives à la rentabilité d'un projet d'autoconsommation ou pour optimiser une installation photovoltaïque existante.

A cet effet, l'invention a pour objet un procédé de détermination de quantités d'énergie échangées entre des entités d'une installation électrique et un réseau de distribution électrique, l'installation électrique étant destinée à être utilisée par un consommateur et comprenant au moins :
- une entité de production d'énergie photovoltaïque,
- une entité de consommation d'énergie photovoltaïque,
le procédé étant mis en œuvre par un dispositif électronique de détermination et comprenant les étapes suivantes :
- acquisition de premières données relatives au consommateur et à l'entité de consommation,
- acquisition de deuxièmes données relatives à l'entité de production,
- détermination, en fonction des premières données, de la quantités d'énergie consommée par l'entité de consommation pour au moins une tranche horaire prédéfinie d'une période temporelle prédéterminée, dite première quantité d'énergie,
- détermination, en fonction des deuxièmes données, de la quantité d'énergie produite par l'entité de production sur la au moins une tranche horaire prédéfinie de la période temporelle prédéterminée, dite deuxième quantité d'énergie, et
- détermination des quantités d'énergie échangées sur la au moins une tranche horaire prédéfinie de la période temporelle prédéterminée entre :
   - l'entité de production et l'entité de consommation, dite première quantité d'énergie autoconsommée,
   - l'entité de production et le réseau de distribution, dite quantité d'énergie refoulée,
en fonction de la première quantité d'énergie, de la deuxième quantité d'énergie, et de sorte à respecter un premier critère de priorité, le premier critère de priorité stipulant que l'énergie produite par l'entité de production est acheminée en priorité à l'entité de consommation.

Suivant des modes de mise en œuvre particuliers, le procédé de détermination comprend une ou plusieurs des caractéristiques suivantes, prises isolement suivant toutes les combinaisons techniquement possibles :
- lors de l'étape de détermination des quantités d'énergie échangées, il est déterminé que :
   - lorsque la première quantité d'énergie est supérieure ou égale à la deuxième quantité d'énergie, la première quantité d'énergie autoconsommée est égale à la deuxième quantité d'énergie et la quantité d'énergie refoulée est nulle, et
   - lorsque la première quantité d'énergie est strictement inférieure à la deuxième quantité d'énergie, la première quantité d'énergie autoconsommée est égale à la première quantité d'énergie et la quantité d'énergie refoulée est égale à la quantité d'énergie restante.
- l'installation électrique comprend également une entité de stockage d'énergie photovoltaïque, le procédé comprenant une étape d'acquisition de troisièmes données relatives à l'entité de stockage, l'étape de détermination des quantités d'énergie échangées comprenant, en outre, la détermination des quantités d'énergie échangées sur la au moins une tranche horaire prédéfinie de la période temporelle prédéterminée entre :
   - l'entité de production et l'entité de stockage, dite quantité d'énergie stockée,
   - l'entité de stockage et l'entité de consommation, dite deuxième quantité d'énergie autoconsommées,
      l'étape de détermination des quantités d'énergie échangées étant en outre effectuée en fonction des troisièmes données, le cas échéant, des deuxièmes quantités d'énergie autoconsommées déterminées pour des tranches horaires prédéfinies antérieures et, le cas échéant, des quantités d'énergie stockées déterminées pour des tranches horaires prédéfinies antérieures et de sorte à respecter un deuxième critère, différent du premier critère, le deuxième critère définissant un ordre de priorité entre l'entité de consommation, l'entité de stockage et le réseau de distribution pour la réception de l'énergie produite par l'entité de production ;
- le deuxième critère de priorité stipule que pour chaque plage horaire :
   - lorsque la deuxième quantité d'énergie est inférieure ou égale à la première quantité d'énergie, l'énergie produite par l'entité de production est acheminée en intégralité à l'entité de consommation, et
   - lorsque la deuxième quantité d'énergie est strictement supérieure à la première quantité d'énergie, une quantité d'énergie produite par l'entité de production égale à la première quantité d'énergie est acheminée à l'entité de consommation, l'énergie produite restante étant acheminée en priorité à l'entité de stockage tant que l'entité de stockage est propre à stocker ladite énergie, et étant ensuite acheminée au réseau de distribution ;
- l'étape de détermination des quantités d'énergie échangées comprend la détermination sur la au moins une tranche horaire prédéfinie de la période temporelle prédéterminée de la capacité courante de stockage d'énergie de l'entité de stockage et de la quantité d'énergie courante stockée sur l'entité de stockage en fonction des troisièmes données, le cas échéant, des deuxièmes quantités d'énergie autoconsommées déterminées pour des tranches horaires prédéfinies antérieures et, le cas échéant, des quantités d'énergie stockée déterminées pour des tranches horaires prédéfinies antérieures,
   lors de l'étape de détermination des quantités d'énergie échangées, il est déterminé que :
   - lorsque la première quantité d'énergie est supérieure ou égale à la somme de la deuxième quantité d'énergie et de la quantité d'énergie courante stockée, la première quantité d'énergie autoconsommée est égale à la deuxième quantité d'énergie, la deuxième quantité d'énergie autoconsommée est égale à la quantité d'énergie courante stockée, la quantité d'énergie stockée est nulle et la quantité d'énergie refoulée est nulle,
   - lorsque la première quantité d'énergie est strictement supérieure à la deuxième quantité d'énergie et est inférieure ou égale à la somme de la deuxième quantité d'énergie et de la quantité d'énergie courante stockée, la première quantité d'énergie autoconsommée est égale à la deuxième quantité d'énergie, la deuxième quantité d'énergie autoconsommée est égale à la différence entre la première quantité d'énergie et la deuxième quantité d'énergie, la quantité d'énergie stockée est nulle et la quantité d'énergie refoulée est nulle,
   - lorsque la première quantité d'énergie est inférieure ou égale à la deuxième quantité d'énergie, la première quantité d'énergie autoconsommée est égale à la première quantité d'énergie, la deuxième quantité d'énergie autoconsommée est nulle, la quantité d'énergie stockée est égale au minimum entre, d'une part, la capacité courante de stockage et, d'autre part, la différence entre la deuxième quantité d'énergie et la première quantité d'énergie, et la quantité d'énergie refoulée est égale à la quantité d'énergie produite restante ;
- les premières données comprennent des données définissant un profil de consommation d'énergie personnalisé pour le consommateur et des données de référence de consommation d'énergie par l'entité de consommation lors de son utilisation par le consommateur, l'étape de détermination de la première quantité d'énergie comprenant :
   - une estimation de la quantité d'énergie statistique consommée par l'entité de consommation pour la au moins une tranche horaire prédéfinie de la période temporelle prédéterminée en fonction des données définissant le profil de consommation, et
   - une correction de l'estimation en fonction des données de référence de consommation d'énergie pour obtenir la première quantité d'énergie ;
- les deuxièmes données comprennent des données définissant un profil de production d'énergie personnalisé pour l'entité de production et des données de référence de production d'énergie par l'entité de production, l'étape de détermination des deuxièmes quantités d'énergie comprenant :
   - une estimation de la quantité d'énergie statistique produite par l'entité de production pour la au moins une tranche horaire prédéfinie de la période temporelle prédéterminée en fonction du profil de production, et
   - une correction de l'estimation en fonction des données de référence de production d'énergie pour obtenir la deuxième quantité d'énergie ;
- les étapes de détermination du procédé sont effectuées pour une pluralité de tranches horaires prédéfinies de la durée prédéterminée, le procédé comprenant la détermination d'un taux d'autoconsommation de l'installation électrique en fonction des quantités d'énergie échangées déterminées, le taux d'autoconsommation étant le rapport entre la somme des quantités d'énergie autoconsommées sur la période temporelle prédéterminée et la somme des deuxièmes quantités d'énergie sur la période temporelle prédéterminée ;
- le procédé comprend une étape d'acquisition de quatrième données relatives aux tarifs de l'électricité et au coût de l'entité de production et une étape de détermination d'au moins une cinquième donnée relative à la rentabilité de l'installation en fonction des quantités d'énergie échangées déterminées et des quatrièmes données.

La présente description se rapporte aussi à un produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'un procédé tel que décrit précédemment lorsque le programme d'ordinateur est mis en œuvre sur l'unité de traitement des données.

D'autres caractéristiques et avantages de l'invention apparaitront à la lecture de la description qui suit de modes de réalisation de l'invention, donnés à titre d'exemple uniquement et en référence aux figures qui sont :
- [Fig1] la figure 1 est une représentation schématique d'une installation électrique et d'un réseau de distribution,
- [Fig2] la figure 2 est une représentation schématique d'un exemple d'un dispositif électronique de détermination, et
- [Fig3] la figure 3 et un organigramme d'un exemple de mise en œuvre d'un procédé de détermination de quantités d'énergie échangées entre l'installation électrique et le réseau de distribution électrique.

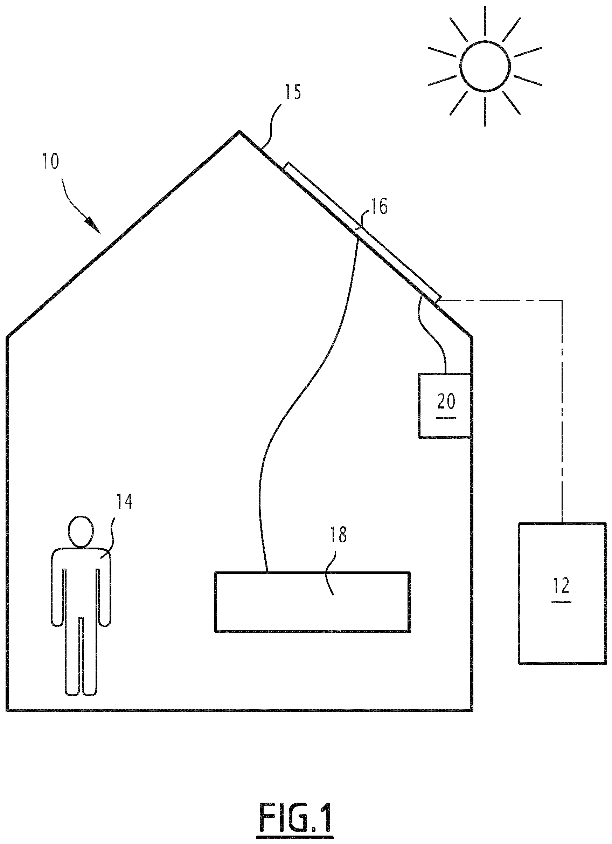

Une installation électrique 10 et un réseau de distribution électrique 12 sont illustrés par la figure 1.

L'installation électrique 10 est destinée à être utilisée par un consommateur 14. Par le terme « consommateur », il est entendu un individu ou un groupe d'individus. Par le terme « utilisé », il est entendu que la consommation d'énergie est commandée par le consommateur 14.

L'installation électrique 10 est une installation physique existante. En variante, l'intégralité de l'installation 10 ou au moins certaines entités de l'installation 10 résultent d'une simulation.

L'installation électrique 10 et, par exemple, une installation domestique telle qu'une habitation comprenant un toit 15, tel qu'illustré en figure 1.

L'installation électrique 10 comprend une entité 16 de production d'énergie photovoltaïque, une entité 18 de consommation d'énergie photovoltaïque et, optionnellement, une entité 20 de stockage d'énergie photovoltaïque.

Dans l'exemple illustré par la figure 1, l'entité de production 16 est configurée pour être installée sur le toit 15 de l'installation 10. En particulier, l'entité de production 16 comprend des panneaux photovoltaïques (aussi appelés panneaux solaires). Les panneaux solaires sont destinés à occuper une partie de la surface du toit 15 de l'installation 10 et présentent un angle d'inclinaison par rapport au sol dépendant notamment de l'inclinaison du toit 15 de l'installation 10 par rapport au sol. Par exemple, les panneaux solaires sont installés sur le toit d'une habitation (figure 1) ou sur le toit d'une ombrière de parking.

En variante, l'entité de production 16 est installé à d'autres endroits de l'installation 10 par exemple, au sol ou sur un mur de l'installation 10.

L'entité de consommation 18 est configurée pour consommer de l'énergie électrique et notamment l'énergie photovoltaïque produite par l'entité de production 16.

L'entité de consommation 18 comprend l'ensemble des organes de l'installation 10 consommateurs d'énergie électrique. Dans une habitation, de tels organes sont, par exemple, la climatisation, le système de chauffage électrique, le chauffe-eau, l'éclairage, et l'ensemble des appareils électriques non-autonomes présents dans l'installation 10. L'usage des différents organes de l'entité de consommation 18 dépend notamment du consommateur 14.

L'entité de stockage 20 est configurée pour stocker l'énergie photovoltaïque produite par l'entité de production 16. L'entité de stockage 20 présente une capacité de stockage définie comme étant la quantité d'énergie maximale susceptible d'être stockée dans l'entité de stockage 20. L'entité de stockage 20 comprend, par exemple, des batteries.

Le réseau de distribution électrique 12 est un réseau permettant de distribuer de l'énergie électrique à des consommateurs. Le réseau de distribution électrique 12 est, par exemple, le réseau de distribution géré par la société Enedis en France.

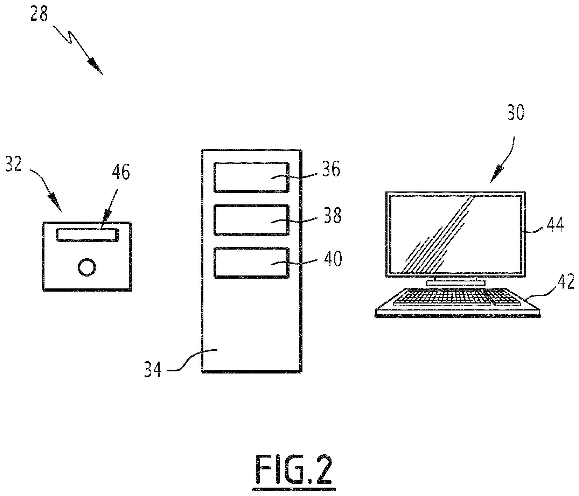

La figure 2 illustre un exemple d'un dispositif électronique de détermination de quantités d'énergie échangées entre les entités de l'installation électrique 10 et le réseau de distribution électrique 12. Dans la suite de description, l'homme du métier comprendra que le terme « quantités d'énergie échangées » peut aussi se comprendre comme désignant un flux d'énergie.

Le dispositif électronique 28 comprend un calculateur 30 en interaction avec un produit programme d'ordinateur 32.

Le calculateur 30 est, de préférence un ordinateur.

Plus généralement, le calculateur 30 est un calculateur électronique propre à manipuler et/ou transformer des données représentées comme des quantités électroniques ou physiques dans des registres de calculateur 30 et/ou des mémoires en d'autres données similaires correspondant à des données physiques dans des mémoires, des registres ou d'autres types de dispositifs d'affichage, de transmission ou de mémorisation.

Comme indiqué précédemment, le calculateur 30 est en interaction avec le produit programme d'ordinateur 32.

Comme illustré par la figure 2, le calculateur 30 comporte un processeur 34 comprenant une unité de traitement de traitement 36, des mémoires 38 et un lecteur 40 de support d'information. Dans l'exemple illustré par la figure 2, le calculateur 30 comprend une interface homme-machine 42 et une unité d'affichage 44.

Le produit programme d'ordinateur 32 comporte un support d'information 46.

Le support d'information 46 est un support lisible par le calculateur 30, usuellement par l'unité de traitement de données 36. Le support lisible d'information 46 est un médium adapté à mémoriser des instructions électroniques et capable d'être couplé à un bus d'un système informatique.

A titre d'exemple, le support d'informations 26 est une disquette ou disque souple (de la dénomination anglaise « *Floppy disc* »), un disque optique, un CD-ROM, un disque magnéto-optique, une mémoire ROM, une mémoire RAM, une mémoire EPROM, une mémoire EEPROM, une carte magnétique ou une carte optique.

Sur le support d'information 46 est mémorisé le programme d'ordinateur 32 comprenant des instructions de programme.

Le programme d'ordinateur 32 est chargeable sur l'unité de traitement de données 36 et est adapté pour entraîner la mise en œuvre d'un procédé de détermination de quantités d'énergie échangées entre les entités de l'installation électrique 10 et le réseau de distribution électrique 12 qui sera décrit dans la suite de la description.

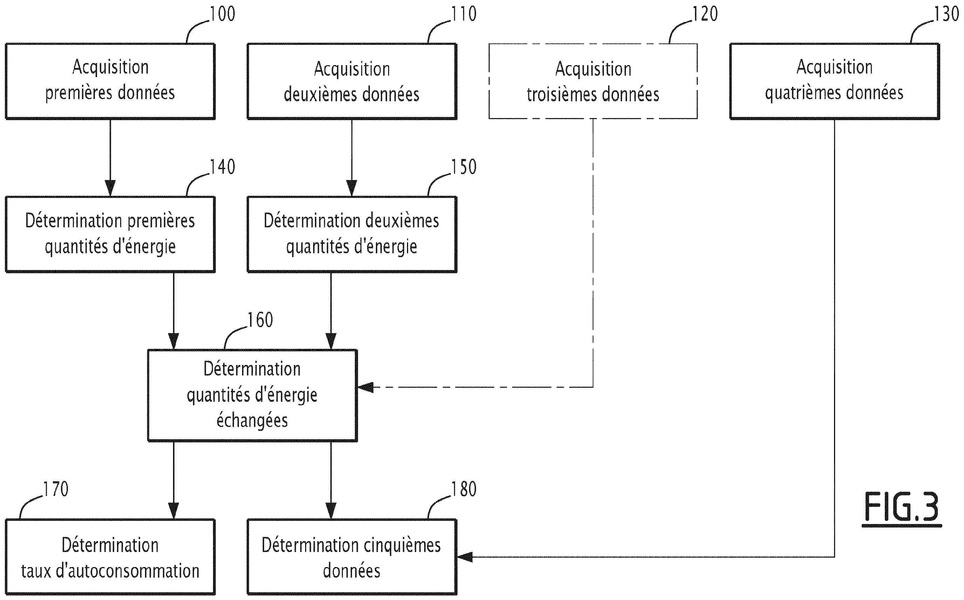

Un exemple de procédé de détermination de quantités d'énergie échangées entre les entités de l'installation électrique 10 et le réseau de distribution 12, mis en œuvre par le dispositif électronique de détermination 28, va maintenant être décrit en référence à l'organigramme de la figure 3.

Le procédé de détermination comprend une étape 100 d'acquisition de premières données relatives au consommateur 14 et à l'entité de consommation 18. Avantageusement, au moins une première donnée est une mesure effectuée par un capteur.

Les premières données comprennent, d'une part, des données définissant un profil de consommation d'énergie personnalisé pour le consommateur 14 et, d'autre part, des données de référence de consommation d'énergie par l'entité de consommation 18 lors de son utilisation par le consommateur 14.

Les données définissant le profil de consommation d'énergie comprennent, par exemple, un profil statistique du consommateur 14 (profil choisi parmi un ensemble de profils types en fonction de la typologie du consommateur, tels que par exemple différents profils de consommateurs résidentiels) et des données spécifiques au consommateur 14.

Les données spécifiques au consommateur 14 sont, par exemple, obtenues via un questionnaire rempli par le consommateur 14. De telles données sont, par exemple, relatives : aux usages du consommateur 14, au type d'installation 10 du consommateur 14 et à la zone climatique du lieu dans lequel se trouve l'installation 10 du consommateur 14. Les données relatives aux usage du consommateur 14 comprennent, par exemple, le mode de chauffage de l'installation 10, la présence ou non d'un chauffe-eau électrique dans l'installation 10 et la présence ou non d'une climatisation dans l'installation 10. Les données relatives au type d'installation 10 comprennent, par exemple, la surface de l'habitation, le type d'habitation, le nombre d'habitants dans l'habitation. Les données relatives à la zone climatique comprennent, par exemple, la localisation de l'installation.

Les données spécifiques au consommateur 14 permettent de modifier le profil de consommation statistique et ainsi d'obtenir un profil de consommation personnalisé pour le consommateur 14.

Les données de référence de consommation d'énergie sont, par exemple, les données réelles antérieures de consommation d'énergie du consommateur 14 dans l'installation 10. De telles données sont, par exemple, obtenues par des mesures, notamment effectuées par des capteurs. Par exemple, de telles données sont obtenues directement de la société gérant le réseau de distribution électrique 12, telle que la société Enedis. Par exemple, les données sont obtenues par un dispositif de lecture de données d'une interface TIC (pour Télé-Information Client) d'un compteur électrique Linky™ de la société Enedis, comme un émetteur-radio local par exemple.

Le procédé de détermination comprend, également, une étape 110 d'acquisition de deuxièmes données relatives à l'entité de production 16.

Les deuxièmes données comprennent, d'une part, des données définissant un profil de production d'énergie personnalisé pour l'entité de production 16, et, d'autre part, des données de référence de production d'énergie par l'entité de production 16.

Les données définissant le profil de production d'énergie comprennent, par exemple, un profil statistique de l'entité de production 16 (profil choisi parmi un ensemble de profils types en fonction de la typologie de l'entité de production) et des données spécifiques à l'entité de production 16.

Les données spécifiques à l'entité de production 16 sont, par exemple, obtenues à partir d'un questionnaire complété par le consommateur 14 et/ou d'un logiciel de simulation. De telles données sont, par exemple, des données relatives à la position spécifique de l'installation 10 (telles que les coordonnées géographiques de l'installation 10, l'azimut de l'installation 10 et l'inclinaison du toit 15 de l'installation 10), à la surface de toit 15 de l'installation 10 disponible pour l'installation d'une entité de production 16 et à la puissance de l'entité de production 16 (puissance des panneaux photovoltaïques).

Les données spécifiques à l'entité de production 16 permettent de modifier le profil de production statistique et ainsi d'obtenir un profil de production personnalisé pour l'entité de production 16.

Les données de référence de production sont notamment des données relatives à la production d'énergie que devrait produire l'installation 10 en fonction de la surface de toit 15 disponible pour l'installation de l'entité de production 16. Les données sont, par exemple, des données simulées obtenues à partir d'un logiciel de simulation de la production d'énergie théorique de l'installation 10. Un tel logiciel est, par exemple, le logiciel Google Sunroof permettant notamment de déterminer la production solaire mensuelle d'une portion de photovoltaïque sur une portion de toit 15 et de donner la surface de toit 15 disponible. En variante, les données de référence de production sont obtenues par des mesures effectuées sur une entité de production existante équivalente.

Le procédé comprend, le cas échéant, une étape 120 d'acquisition de troisièmes données relatives à l'entité de stockage 20. Une telle étape d'acquisition de troisièmes données a lieu seulement lorsque l'installation 10 comprend une entité de stockage 20.

Les troisièmes données comprennent, par exemple, la capacité de stockage et la puissance de l'entité de stockage 20 (capacité et puissance des batteries notamment).

Le procédé de détermination comprend une étape optionnelle 130 d'acquisition de quatrièmes données relatives au tarif de l'électricité et au coût de l'entité de production 16.

Les quatrièmes données sont, par exemple, choisies dans la liste constituée de : le prix de l'installation 10, l'évolution des prix de l'électricité, le tarif d'injection de l'énergie refoulée sur le réseau de distribution 12, le taux de vieillissement des panneaux photovoltaïques de l'entité de production 16, un taux de crédit pour la mise en place de l'installation 10, une durée de remboursement du crédit et des aides financières d'état.

Le procédé de détermination comprend une étape 140 de détermination, en fonction des premières données, des quantités d'énergie consommées heure par heure par l'entité de consommation 18 sur une période temporelle prédéterminée. De telles quantités d'énergie consommées sont appelées premières quantités d'énergie E1 dans la suite de la description. La période temporelle prédéterminée est, par exemple, une année, ou un ou plusieurs mois.

Par exemple, cette étape de détermination 140 comprend une estimation des quantités d'énergie consommées heure par heure par l'entité de consommation 18 sur la période temporelle prédéterminée en fonction des données définissant le profil de consommation du consommateur 14. Les quantités d'énergie estimées sont donc des quantités d'énergie statistiques qui ont été adaptées pour prendre en compte les spécificités du consommateur 14. De telles quantités d'énergie estimées sont donc théoriques.

Dans cet exemple, l'étape de détermination 140 comprend aussi une correction de l'estimation en fonction des données de référence de consommation d'énergie, ce qui permet d'obtenir les premières quantités d'énergie E1. Une telle correction consiste, par exemple, à ajuster le profil de consommation du consommateur 14 pour que la somme sur la période temporelle prédéterminée des quantités d'énergie consommées estimées corresponde à la somme des données de référence de consommation sur la période temporelle prédéterminée. Ainsi, plus l'écart entre les quantités d'énergie consommées estimées et les données de référence de consommation est grand, plus l'ajustement des paramètres du profil du consommateur 14 est important, ce qui va augmenter la marge d'erreur. Cette marge d'erreur sera donc d'autant plus grande que le nombre de données de référence est faible.

Avantageusement, les premières quantités d'énergie E1 déterminées sont associées à un indice de fiabilité. L'indice de fiabilité est fonction du nombre de données de référence de consommation et de l'écart entre l'estimation et les données de référence de consommation. Notamment, l'indice de fiabilité indique que la marge d'erreur est d'autant plus grande que le nombre de données de référence est faible. En outre, plus l'effort d'ajustement des paramètres du profil pour réduire l'écart entre les données de consommation estimées et les données de référence est important, plus l'indice de fiabilité est faible.

Le procédé de détermination comprend une étape 150 de détermination, en fonction des deuxièmes données, des quantités d'énergie produites heure par heure par l'entité de production 16 sur la période temporelle prédéterminée. De telles quantités d'énergie produites sont appelées deuxièmes quantités d'énergie E2 dans la suite de la description.

L'étape de détermination 150 des deuxièmes quantités d'énergie E2 comprend, par exemple, une estimation des quantités d'énergie produites heure par heure par l'entité de production 16 sur la période temporelle prédéterminée en fonction des données définissant le profil de production de l'entité de production 16. Les quantités d'énergie estimées sont donc des quantités d'énergie statistiques qui ont été adaptées pour prendre en compte les spécificités de l'entité de production 16.

L'étape de détermination 150 comprend aussi la correction de l'estimation obtenue en fonction des données de référence de production d'énergie pour obtenir les deuxièmes quantités d'énergie E2. Une telle correction consiste, par exemple, à ajuster le profil de production de l'entité de production 16 pour que la somme sur la période temporelle prédéterminée des quantités d'énergie horaires produites estimées corresponde à la somme des données de référence de production sur la période temporelle prédéterminée. Eventuellement, les deuxièmes quantités d'énergie E2 déterminées sont aussi associées à un indice de fiabilité.

Le procédé de détermination comprend une étape 160 de détermination des quantités d'énergie échangées heure par heure sur la période temporelle prédéterminée entre les différentes entités de l'installation électrique 10 et le réseau de distribution électrique 12.

En particulier, les quantités d'énergie déterminées sont les quantités d'énergie échangées heure par heure sur la période temporelle prédéterminée entre :
- l'entité de production 16 et l'entité de consommation 18, dites premières quantités d'énergie autoconsommées Eₐᵤₜₒ₁,
- l'entité de production 16 et le réseau de distribution 12, dites quantités d'énergie refoulées E_{refoulée},
- le cas échéant, l'entité de production 16 et l'entité de stockage 20, dites quantités d'énergie stockées, et
- le cas échéant, l'entité de stockage 20 et l'entité de consommation 18, dites deuxièmes quantités d'énergie autoconsommées Eₐᵤₜₒ₂.

Par exemple, dans un premier mode de mise en œuvre dans lequel l'entité de stockage 20 n'est pas prise en compte, les quantités d'énergie échangées sont déterminées en fonction des premières quantités d'énergie E1, des deuxièmes quantités d'énergie E2, et de sorte à respecter un premier critère de priorité. Le premier critère de priorité stipule que l'énergie produite par l'entité de production 16 est acheminée en priorité à l'entité de consommation 18.

Notamment, lorsque la première quantité d'énergie E1 est supérieure ou égale à la deuxième quantité d'énergie E2 (E1 ≥ E2), il est déterminé que :
- la première quantité d'énergie autoconsommée Eₐᵤₜₒ₁ est égale à la deuxième quantité d'énergie, et
- la quantité d'énergie refoulée E_{refoulée} est nulle.

Lorsque la première quantité d'énergie E1 est strictement inférieure à la deuxième quantité d'énergie E2 (E1 < E2), il est déterminé que :
- la première quantité d'énergie autoconsommée Eₐᵤₜₒ₁ est égale à la première quantité d'énergie E1, et
- la quantité d'énergie refoulée E_{refoulée} est égale à la quantité d'énergie produite restante.

Dans un deuxième mode mise en œuvre dans lequel l'entité de stockage 20 est prise en compte, les quantités d'énergie échangées sont déterminées en fonction des premières quantités d'énergie E1, des deuxièmes quantités d'énergie E2, des troisièmes données, des deuxièmes quantités d'énergie autoconsommées Eₐᵤₜₒ₂ déterminées aux heures précédentes et des quantités d'énergie stockées déterminées aux heures précédentes. En particulier, les quantités échangées sont déterminées de sorte à respecter, outre le premier critère, un deuxième critère.

Le deuxième critère définit un ordre de priorité entre l'entité de consommation 18, l'entité de stockage 20 et le réseau de distribution 12 pour la réception de l'énergie produite par l'entité de production 16. De préférence, le deuxième critère de priorité stipule que, pour chaque plage horaire :
- lorsque la deuxième quantité d'énergie E2 est inférieure ou égale à la première quantité d'énergie E1, l'énergie produite par l'entité de production 16 est acheminée en intégralité à l'entité de consommation 18,
- lorsque la deuxième quantité d'énergie E2 est strictement supérieure à la première quantité d'énergie E1, une quantité d'énergie produite par l'entité de production 16 égale à la première quantité d'énergie E1 est acheminée à l'entité de consommation 18, l'énergie produite restante étant acheminée en priorité à l'entité de stockage 20 tant que l'entité de stockage 20 est propre à stocker ladite énergie, et étant ensuite acheminée au réseau de distribution 12.

Dans cet exemple, il est également déterminé heure par heure la capacité courante E_{capacité} de stockage d'énergie de l'entité de stockage 20 et la quantité d'énergie courante E_{courante-stock} stockée dans l'entité de stockage 20 en fonction des troisièmes données, des deuxièmes quantités d'énergie autoconsommées Eₐᵤₜₒ₂ déterminées aux heures précédentes et des quantités d'énergie stockées déterminées aux heures précédentes. En particulier, la capacité courante E_{capacité} de stockage d'énergie désigne l'espace restant sur l'entité de stockage 20 pour stocker de l'énergie, le reste de l'espace étant utilisé par de l'énergie qui est déjà stockée. La quantité d'énergie courante E_{courante-stock} stockée dans l'entité de stockage 20 désigne la quantité d'énergie stockée lors des heures précédentes dans l'entité de stockage 20 et qui pourrait être utilisée par l'entité de consommation 18 en tant que deuxième quantité d'énergie autoconsommée Eₐᵤₜₒ₂. Ainsi en fonction des troisièmes données qui donnent la capacité totale de l'entité de stockage 20, des quantités d'énergie acheminées à l'entité de stockage 20aux heures précédentes et des quantités d'énergie prélevées dans l'entité de stockage 20 aux heures précédentes, il est possible de déterminer la capacité courante E_{capacité} de l'entité de stockage 20 et la quantité d'énergie courante E_{courante-stock} stockée dans l'entité de stockage 20.

En outre, dans cet exemple, il est déterminé que :
- lorsque la première quantité d'énergie E1 est supérieure ou égale à la somme de la deuxième quantité d'énergie E2 et de la quantité d'énergie courante stockée E_{courante-stock} (E1 ≥ Σ(E2+ E_{courante-stock})):
   - la première quantité d'énergie autoconsommée Eₐᵤₜₒ₁ est égale à la deuxième quantité d'énergie E2,
   - la deuxième quantité d'énergie autoconsommée Eₐᵤₜₒ₂ est égale à la quantité d'énergie courante stockée E_{courante-stock},
   - la quantité d'énergie stockée E_{stock} est nulle, et
   - la quantité d'énergie refoulée E_{refoulée} est nulle,
- lorsque la première quantité d'énergie E1 est strictement supérieure à la deuxième quantité d'énergie E2 (E1 > E2) et est inférieure ou égale à la somme de la deuxième quantité d'énergie E2 et de la quantité d'énergie courante stockée E_{courante-stock} (E1 ≤ Σ(E2+ E_{courante-stock})) :
   - la première quantité d'énergie autoconsommée Eₐᵤₜₒ₁ est égale à la deuxième quantité d'énergie,
   - la deuxième quantité d'énergie autoconsommée Eₐᵤₜₒ₂ est égale à la différence entre la première quantité d'énergie E1 et la deuxième quantité d'énergie E2,
   - la quantité d'énergie stockée E_{stock} est nulle, et
   - la quantité d'énergie refoulée E_{refoulée} est nulle,
- lorsque la première quantité d'énergie E1 est inférieure ou égale à la deuxième quantité d'énergie E2 (E1 ≤ E2) :
   - la première quantité d'énergie autoconsommée Eₐᵤₜₒ₁ est égale à la première quantité d'énergie E1,
   - la deuxième quantité d'énergie autoconsommée Eₐᵤₜₒ₂ est nulle,
   - la quantité d'énergie stockée E_{stock} est égale au minimum entre, d'une part, la capacité courante de stockage E_{capacité} et, d'autre part, la différence entre la deuxième quantité d'énergie E2 et la première quantité d'énergie E1, et
   - la quantité d'énergie refoulée E_{refoulée} est égale à la quantité d'énergie produite restante.

Le procédé de détermination comprend optionnellement une étape 170 de détermination d'un taux d'autoconsommation de l'installation électrique 10 en fonction des quantités d'énergie échangées déterminées.

Le taux d'autoconsommation est le rapport entre la somme des quantités d'énergie autoconsommées Eₐᵤₜₒ₁, Eₐᵤₜₒ₂ sur la période temporelle prédéterminée et la somme des deuxièmes quantités d'énergie E2 sur la période temporelle prédéterminée. Ainsi, dans le cas où une entité de stockage 20 est prise en compte pour la détermination des quantités d'énergie échangées, les quantités d'énergie autoconsommées considérées sont les premières et deuxièmes quantités d'énergie autoconsommées Eₐᵤₜₒ₁, Eₐᵤₜₒ₂. Le taux d'autoconsommation est exprimé en pourcentage. Plus le taux d'autoconsommation est élevé, meilleure est la rentabilité de l'installation 10 en termes d'autoconsommation.

Le procédé comprend, optionnellement une étape 180 de détermination de cinquièmes données relatives à la rentabilité de l'installation 10 en fonction des quantités d'énergie échangées déterminées et des quatrièmes données.

Les cinquièmes données sont, par exemple, le retour sur investissements d'un projet d'autoconsommation relatif à l'installation 10 utilisée par le consommateur 14, les liquidités générées par l'installation 10 prenant ou non en compte la présence d'un crédit pour la mise en place de l'entité de production 16 et la simulation des économies réalisées par la mise en place de l'entité de production 16 en prenant ou non en compte la présence d'un crédit pour la mise en place de l'entité de production 16. La simulation des économies est réalisée, par exemple, sur une durée de 25 ans.

En variante ou en complément, le procédé comprend une étape de mise en place (ou réalisation) d'une installation électrique 10 ayant permis d'obtenir les quantités d'énergie échangées. Cela consiste, par exemple, à mettre en place une entité de production 16 et une entité de stockage 20 dans une habitation ayant déjà l'équivalent d'une entité de consommation 18.

En variante ou en complément, le procédé comprend une étape d'optimisation de l'installation 10 en fonction des quantités d'énergie échangées déterminées, par exemple, de sorte à augmenter les premières quantités d'énergie autoconsommées Eₐᵤₜₒ₁ et, le cas échéant, les deuxièmes quantités d'énergie autoconsommées Eₐᵤₜₒ₂. L'étape d'optimisation consiste, par exemple, en une modification de l'installation 10 en fonction des quantités d'énergie échangées déterminées, notamment lorsque les quantités d'énergie autoconsommées sont inférieures ou égale à un seuil prédéterminé ou lorsque le taux d'autoconsommation est inférieur ou égal à un seuil prédéterminé (par exemple 10%). La modification de l'installation 10 consiste, par exemple, en une modification de l'entité de production 16 de l'installation 10 et/ou, le cas échéant, de l'entité de stockage 20 de l'installation 10.

Ainsi, un tel procédé permet de déterminer de manière rapide et simple pour un consommateur 14, les quantités d'énergie échangées entre les différentes entités de son installation et le réseau de distribution électrique 12. Ces données pourront être utilisées par la suite pour calculer un certain nombre de paramètres relatifs à la rentabilité de l'installation 10, notamment un taux d'autoconsommation ou des cinquièmes données, ou pour optimiser l'installation 10. La détermination effectuée est, en outre, reproductible.

En outre, le consommateur 14 peut procéder lui-même via le dispositif de détermination 28 à la détermination de telles quantités d'énergie. Cela lui permet de moduler facilement son projet d'autoconsommation (par exemple en changeant des caractéristiques de l'entité de production 16).

De plus, le présent procédé permet de prendre en compte ou non la présence d'une entité de stockage 20 dans l'installation du consommateur 14, ce qui permet d'obtenir des quantités d'énergie déterminées de manière précise.

L'homme du métier comprendra que le procédé décrit dans la présente description est donné à titre d'exemple avec des quantités d'énergie déterminées heure par heure sur une période temporelle prédéfinie et qu'un tel procédé se généralise en remplaçant la notion de « heure par heure » par d'autres tranches horaires prédéfinies sur la période temporelle prédéfinie. De telles tranches horaires sont, par exemple, de durées identiques entre elles (par exemple 30 minutes, 15 minutes). Les quantités d'énergie sont alors déterminées lors de la mise en œuvre du procédé pour au moins une tranche horaire prédéfinie de la période temporelle prédéfinie. Avantageusement, les quantités d'énergie sont déterminées pour des tranches horaires prédéfinies successives de la période temporelle prédéfinie, préférentiellement pour chaque tranche horaire prédéfinie successive de la période temporelle prédéfinie.

## Revendications

1. Procédé de détermination de quantités d'énergie échangées entre des entités d'une installation électrique (10) et un réseau de distribution électrique (12), l'installation électrique (10) étant destinée à être utilisée par un consommateur (14) et comprenant au moins :
- une entité (16) de production d'énergie photovoltaïque,
- une entité (18) de consommation d'énergie photovoltaïque,
le procédé étant mis en œuvre par un dispositif électronique de détermination (28) et comprenant les étapes suivantes :
- acquisition de premières données relatives au consommateur (14) et à l'entité de consommation (18),
- acquisition de deuxièmes données relatives à l'entité de production (16),
- détermination, en fonction des premières données, de la quantités d'énergie consommée par l'entité de consommation (18) pour au moins une tranche horaire prédéfinie d'une période temporelle prédéterminée, dite première quantité d'énergie (E1),
- détermination, en fonction des deuxièmes données, de la quantité d'énergie produite par l'entité de production (16) sur la au moins une tranche horaire prédéfinie de la période temporelle prédéterminée, dite deuxième quantité d'énergie (E2), et
- détermination des quantités d'énergie échangées sur la au moins une tranche horaire prédéfinie de la période temporelle prédéterminée entre :
- l'entité de production (16) et l'entité de consommation (18), dite première quantité d'énergie autoconsommée (Eₐᵤₜₒ₁),
- l'entité de production (16) et le réseau de distribution (12), dite quantité d'énergie refoulée (E_{refoulée}),
en fonction de la première quantité d'énergie (E1), de la deuxième quantité d'énergie (E2), et de sorte à respecter un premier critère de priorité, le premier critère de priorité stipulant que l'énergie produite par l'entité de production (16) est acheminée en priorité à l'entité de consommation (18).

2. Procédé selon la revendication 1, dans lequel lors de l'étape de détermination des quantités d'énergie échangées, il est déterminé que :
- lorsque la première quantité d'énergie (E1) est supérieure ou égale à la deuxième quantité d'énergie (E2), la première quantité d'énergie autoconsommée (Eₐᵤₜₒ₁) est égale à la deuxième quantité d'énergie (E2) et la quantité d'énergie refoulée (E_{refoulée}) est nulle, et
- lorsque la première quantité d'énergie (E1) est strictement inférieure à la deuxième quantité d'énergie (E2), la première quantité d'énergie autoconsommée (Eₐᵤₜₒ₁) est égale à la première quantité d'énergie (E1) et la quantité d'énergie refoulée (E_{refoulée}) est égale à la quantité d'énergie produite restante.

3. Procédé selon la revendication 1, dans lequel l'installation électrique (10) comprend également une entité (20) de stockage d'énergie photovoltaïque, le procédé comprenant une étape d'acquisition de troisièmes données relatives à l'entité de stockage (20), l'étape de détermination des quantités d'énergie échangées comprenant, en outre, la détermination des quantités d'énergie échangées sur la au moins une tranche horaire prédéfinie de la période temporelle prédéterminée entre :
- l'entité de production (16) et l'entité de stockage (20), dite quantité d'énergie stockée (E_{stock}),
- l'entité de stockage (20) et l'entité de consommation (18), dite deuxième quantité d'énergie autoconsommées (Eₐᵤₜₒ₂),
l'étape de détermination des quantités d'énergie échangées étant en outre effectuée en fonction des troisièmes données, le cas échéant, des deuxièmes quantités d'énergie autoconsommées (Eₐᵤₜₒ₂) déterminées pour des tranches horaires prédéfinies antérieures et, le cas échéant, des quantités d'énergie stockées (E_{stock}) déterminées pour des tranches horaires prédéfinies antérieures et de sorte à respecter un deuxième critère, différent du premier critère, le deuxième critère définissant un ordre de priorité entre l'entité de consommation (18), l'entité de stockage (20) et le réseau de distribution (12) pour la réception de l'énergie produite par l'entité de production (16).

4. Procédé selon la revendication 3, dans lequel le deuxième critère de priorité stipule que pour chaque plage horaire :
- lorsque la deuxième quantité d'énergie (E2) est inférieure ou égale à la première quantité d'énergie (E1), l'énergie produite par l'entité de production (16) est acheminée en intégralité à l'entité de consommation (18), et
- lorsque la deuxième quantité d'énergie (E2) est strictement supérieure à la première quantité d'énergie (E1), une quantité d'énergie produite par l'entité de production (16) égale à la première quantité d'énergie (E1) est acheminée à l'entité de consommation (18), l'énergie produite restante étant acheminée en priorité à l'entité de stockage (20) tant que l'entité de stockage (20) est propre à stocker ladite énergie, et étant ensuite acheminée au réseau de distribution (12).

5. Procédé selon la revendication 3 ou 4, dans lequel l'étape de détermination des quantités d'énergie échangées comprend la détermination sur la au moins une tranche horaire prédéfinie de la période temporelle prédéterminée de la capacité courante de stockage d'énergie (E_{capacité}) de l'entité de stockage (20) et de la quantité d'énergie courante stockée (E_{courante-stock}) sur l'entité de stockage (20) en fonction des troisièmes données, le cas échéant, des deuxièmes quantités d'énergie autoconsommées (Eₐᵤₜₒ₂) déterminées pour des tranches horaires prédéfinies antérieures et, le cas échéant, des quantités d'énergie stockée(E_{stock}) déterminées pour des tranches horaires prédéfinies antérieures,
lors de l'étape de détermination des quantités d'énergie échangées, il est déterminé que :
- lorsque la première quantité d'énergie (E1) est supérieure ou égale à la somme de la deuxième quantité d'énergie (E2) et de la quantité d'énergie courante stockée (E_{courante-stock}), la première quantité d'énergie autoconsommée (Eₐᵤₜₒ₁) est égale à la deuxième quantité d'énergie (E2), la deuxième quantité d'énergie autoconsommée (Eₐᵤₜₒ₂) est égale à la quantité d'énergie courante stockée (E_{courante-stock}), la quantité d'énergie stockée (E_{stock}) est nulle et la quantité d'énergie refoulée (E_{refoulée}) est nulle,
- lorsque la première quantité d'énergie (E1) est strictement supérieure à la deuxième quantité d'énergie (E2) et est inférieure ou égale à la somme de la deuxième quantité d'énergie (E2) et de la quantité d'énergie courante stockée (E_{courante-stock}), la première quantité d'énergie autoconsommée (Eₐᵤₜₒ₁) est égale à la deuxième quantité d'énergie, la deuxième quantité d'énergie autoconsommée (Eₐᵤₜₒ₂) est égale à la différence entre la première quantité d'énergie (E1) et la deuxième quantité d'énergie (E2), la quantité d'énergie stockée (E_{stock}) est nulle et la quantité d'énergie refoulée (E_{refoulée}) est nulle,
- lorsque la première quantité d'énergie (E1) est inférieure ou égale à la deuxième quantité d'énergie (E2), la première quantité d'énergie autoconsommée (Eₐᵤₜₒ₁) est égale à la première quantité d'énergie, la deuxième quantité d'énergie autoconsommée (Eₐᵤₜₒ₂) est nulle, la quantité d'énergie stockée (E_{stock}) est égale au minimum entre, d'une part, la capacité courante de stockage (E_{capacité}) et, d'autre part, la différence entre la deuxième quantité d'énergie (E2) et la première quantité d'énergie (E1), et la quantité d'énergie refoulée (E_{refoulée}) est égale à la quantité d'énergie produite restante.

6. Procédé selon l'une quelconque des revendications 1 à 5, dans lequel les premières données comprennent des données définissant un profil de consommation d'énergie personnalisé pour le consommateur (14) et des données de référence de consommation d'énergie par l'entité de consommation (18) lors de son utilisation par le consommateur (14), l'étape de détermination de la première quantité d'énergie (E1) comprenant :
- une estimation de la quantité d'énergie statistique consommée par l'entité de consommation (18) pour la au moins une tranche horaire prédéfinie de la période temporelle prédéterminée en fonction des données définissant le profil de consommation, et
- une correction de l'estimation en fonction des données de référence de consommation d'énergie pour obtenir la première quantité d'énergie (E1).

7. Procédé selon l'une quelconque des revendications 1 à 6, dans lequel les deuxièmes données comprennent des données définissant un profil de production d'énergie personnalisé pour l'entité de production (16) et des données de référence de production d'énergie par l'entité de production (16), l'étape de détermination des deuxièmes quantités d'énergie (E2) comprenant :
- une estimation de la quantité d'énergie statistique produite par l'entité de production (16) pour la au moins une tranche horaire prédéfinie de la période temporelle prédéterminée en fonction du profil de production, et
- une correction de l'estimation en fonction des données de référence de production d'énergie pour obtenir la deuxième quantité d'énergie (E2).

8. Procédé selon l'une quelconque des revendications 1 à 7, dans lequel les étapes de détermination du procédé sont effectuées pour une pluralité de tranches horaires prédéfinies de la durée prédéterminée, le procédé comprenant la détermination d'un taux d'autoconsommation de l'installation électrique (10) en fonction des quantités d'énergie échangées déterminées, le taux d'autoconsommation étant le rapport entre la somme des quantités d'énergie autoconsommées (Eₐᵤₜₒ₁, Eₐᵤₜₒ₂) sur la période temporelle prédéterminée et la somme des deuxièmes quantités d'énergie (E2) sur la période temporelle prédéterminée.

9. Procédé selon l'une quelconque des revendications 1 à 8, dans lequel le procédé comprend une étape d'acquisition de quatrième données relatives aux tarifs de l'électricité et au coût de l'entité de production (16) et une étape de détermination d'au moins une cinquième donnée relative à la rentabilité de l'installation (10) en fonction des quantités d'énergie échangées déterminées et des quatrièmes données.

10. Produit programme d'ordinateur comportant un support lisible d'informations, sur lequel est mémorisé un programme d'ordinateur comprenant des instructions de programme, le programme d'ordinateur étant chargeable sur une unité de traitement de données et adapté pour entraîner la mise en œuvre d'un procédé selon l'une quelconque des revendications 1 à 9 lorsque le programme d'ordinateur est mis en œuvre sur l'unité de traitement des données.
